# FASCICULE DE BREVET EUROPEEN

(11) **EP 0 907 827 B1**
(45) Date de publication et mention de la délivrance du brevet: **22.01.2003**
(21) Numéro de dépôt: 97931844.1
(22) Date de dépôt: 01.07.1997
(51) Int. Cl.: F02M 69/04, F02B 17/00, F02B 31/00

(54) **SYSTEME D'INJECTION DIRECTE DE CARBURANT DANS UNE CHAMBRE DE COMBUSTION D'UN CYLINDRE DE MOTEUR A COMBUSTION INTERNE**
SYSTEM ZUR DIREKT-EINSPRITZUNG VON BRENNSTOFF IM VERBRENNUNGSRAUM EINES ZYLINDERS EINER BRENNKRAFTMASCHINE
SYSTEM FOR DIRECTLY INJECTING FUEL INTO A CYLINDER COMBUSTION CHAMBER OF AN INTERNAL COMBUSTION ENGINE

(30) Priorité: 03.07.1996 FR 9608291
(43) Date de publication de la demande: 14.04.1999
(73) Titulaire: PEUGEOT MOTOCYCLES, F-25350 Beaulieu Mandeure (FR)
(72) Inventeur: STAN, Cornel, D-08280 Aue (DE); KRATZSCH, Matthias, D-04626 Dobitschen (DE); LEFEBVRE, Jean-Louis, F-25550 Dung (FR)
(74) Mandataire: Habasque, Etienne Joel Jean-François
(86) Numéro de dépôt international: FR9701177
(87) Numéro de publication internationale: WO98001668

(56) Documents cités:
- FR-A- 710 975
- FR-A- 1 138 894
- GB-A- 611 620
- US-A- 4 230 073
- PATENT ABSTRACTS OF JAPAN vol. 013, no. 006 (M-781), 9 janvier 1989 & JP 63 215817 A (MAZDA MOTOR CORP), 8 septembre 1988,
- PATENT ABSTRACTS OF JAPAN vol. 005, no. 018 (M-053), 3 février 1981 & JP 55 148919 A (ISHIKAWA ZENJI), 19 novembre 1980,

## Description

La présente invention concerne un système d'injection directe de carburant dans une chambre de combustion d'un cylindre de moteur à combustion interne.

Un tel système d'injection comporte généralement au moins un injecteur de carburant raccordé par exemple à une source de carburant sous pression et des moyens d'amorçage de la combustion dans la chambre constitués par exemple par une bougie d'allumage, disposée généralement à une extrémité de celle-ci.

Les normes de lutte contre la pollution ainsi que les économies de carburant sont des critères de plus en plus importants pour le développement des futurs moteurs notamment des véhicules.

On a ainsi développé dans l'état de la technique, différents systèmes d'injection directe de carburant dans les chambres de combustion des moteurs.

De cette façon, la formation du mélange air/carburant est réalisée entièrement à l'intérieur de la chambre de combustion.

Dans le cas des moteurs à deux temps, l'intérêt de ce type d'injection est de réduire considérablement les pertes de carburant pendant la phase de balayage du cylindre, et donc le niveau des émissions polluantes.

Cependant, cet avantage peut être partiellement occulté par le fait que le temps de formation du mélange est réduit par rapport à celui des systèmes à formation extérieure, par exemple à carburateur ou autre.

Par ailleurs, les conditions aérodynamiques et thermodynamiques pour la répartition et la vaporisation désirées du carburant dans l'air, sont généralement plus difficiles à atteindre dans le cas de la formation du mélange dans le cylindre.

Pour tenter de résoudre ces différents problèmes, on a déjà proposé dans l'état de la technique, différentes dispositions des injecteurs.

On pourra par exemple se reporter au document EP-A-0 302 045 dans lequel le ou les injecteurs sont inclinés en direction de la surface du piston correspondant.

L'effet attendu d'une telle disposition est la vaporisation rapide des gouttelettes de carburant en raison notamment de la température de la surface de ce piston.

Cependant, cette structure présente un certain nombre d'inconvénients, notamment au niveau des pertes de carburant, et donc des émissions polluantes résultantes, en raison de l'injection de carburant au niveau des conduits de transfert du cylindre correspondant.

Par ailleurs, la répartition non optimale du carburant dans l'air, limite le rendement du moteur. Selon GB 611 620 un injecteur est structuré de telle manière qu'un jet de carburant est injecté dans une direction tangentielle à la chambre de combustion, de façon décalée par rapport à un axe longitudinal de celle-ci et inclinée par rapport à un plan transversale à celui-ci.

Le but de l'invention est donc de résoudre ces problèmes.

A cet effet, l'invention a pour objet un système d'injection directe de carburant dans une chambre de combustion d'un cylindre de moteur à combustion interne, comportant au moins un injecteur de carburant et des moyens d'amorçage de la combustion dans la chambre, caractérisé en ce que ledit au moins un injecteur est disposé parallèlement à une direction tangentielle à la chambre, de façon décalée par rapport à l'axe longitudinal de celle-ci et incliné par rapport à un plan transversal à l'axe de celle-ci, en direction des moyens d'amorçage, pour engendrer dans la chambre, un tourbillon de mélange air/carburant en direction des moyens d'amorçage.

L'invention sera mieux comprise à la lecture de la description qui va suivre, donnée uniquement à titre d'exemple et faite en se référant aux dessins annexés, sur lesquels :
- la Fig.1 représente une vue en coupe transversale illustrant la structure générale d'un système d'injection selon l'invention; et
- la Fig.2 représente une vue en coupe prise suivant la ligne II-II de la figure 1.

On reconnaît en effet sur ces figures, un système d'injection directe de carburant dans une chambre de combustion d'un cylindre de moteur à combustion interne notamment de véhicule, par exemple à deux temps, à allumage commandé et alimentation en air par conduits de transfert.

Sur ces figures, la chambre de combustion est désignée par la référence générale 1, tandis que le cylindre correspondant du moteur est désigné par la référence générale 2.

Cette chambre de combustion présente par exemple une forme sensiblement cylindrique à section circulaire et le système d'injection comporte au moins un injecteur de carburant désigné par la référence générale 3 sur ces figures et des moyens d'amorçage de la combustion dans la chambre, désignés par la référence générale 4.

Ces moyens d'amorçage comprennent par exemple de façon classique, une bougie d'allumage.

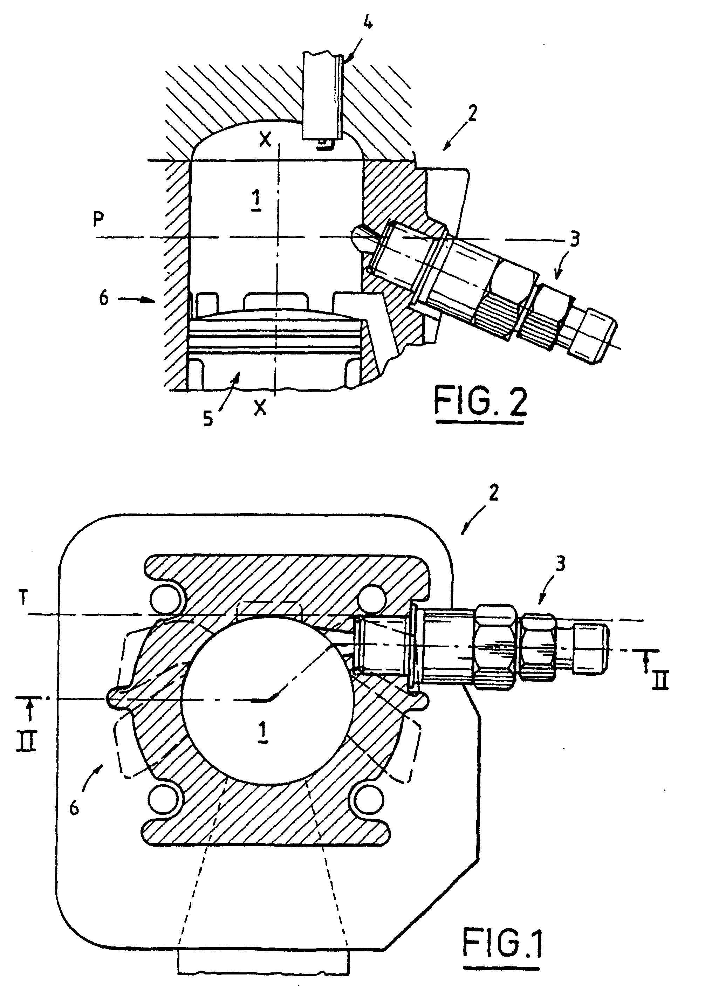

Un piston 5 est également disposé dans le cylindre et ce cylindre comporte de façon classique, au moins un conduit de transfert d'entrée d'air frais et au moins un conduit de sortie des gaz brulés, désignés de façon générale par la référence 6 sur la figure 2.

Cette structure à conduits étant bien connue dans l'état de la technique, on ne la décrira pas plus en détail par la suite.

Selon l'invention, ledit au moins un injecteur 3 est disposé parallèlement à une direction tangentielle T à la chambre de combustion 1, et son axe est décalé par rapport à l'axe longitudinal X-X de la chambre de combustion, comme on peut le voir sur la figure 1. De plus, l'injecteur est incliné par rapport à un plan transversal P à l'axe X-X de cette chambre, en direction des moyens d'amorçage 4, comme on peut le voir sur la figure 2, pour engendrer dans la chambre, un tourbillon de mélange air/carburant en direction des moyens d'amorçage 4.

Cette disposition de l'injecteur permet d'injecter un jet de carburant dans la chambre de combustion, de façon décalée par rapport à l'axe longitudinal X-X de celle-ci et inclinée par rapport à un plan transversal à celui-ci.

Le jet de carburant issu de l'injecteur est alors confiné par le courant d'air frais créé dans la chambre de combustion par les conduits de transfert et la remontée du piston dans le cylindre, ce courant d'air limitant la dispersion de ce jet de carburant et en particulier la venue en contact de celui-ci contre la paroi du cylindre correspondant, tout en assurant un mélange optimal de ce carburant dans l'air, pour former le tourbillon de mélange air/carburant en direction des moyens d'amorçage.

On conçoit alors que le système d'injection selon l'invention présente un certain nombre d'avantages par rapport aux systèmes de l'état de la technique, dans la mesure où il permet d'améliorer la préparation du mélange combustible et la répartition du carburant dans l'air avec pour conséquences l'optimisation du rendement du moteur, la réduction des pertes de carburant et donc des émissions polluantes résultantes.

Il va de soi bien entendu qu'un tel système d'injection peut également être utilisé en association avec un moteur à alimentation en air par soupapes.

## Revendications

1. Système d'injection directe de carburant dans une chambre de combustion d'un cylindre de moteur à combustion interne, comportant au moins un injecteur de carburant (3) et des moyens (4) d'amorçage de la combustion dans la chambre, **caractérisé en ce que** ledit au moins un injecteur (3) est disposé parallèlement à une direction tangentielle (T) à la chambre (1), de façon décalée par rapport à l'axe longitudinal (X-X) de celle-ci et incliné par rapport à un plan transversal (P) à l'axe (X-X) de celle-ci, en direction des moyens d'amorçage (4), pour engendrer dans la chambre, un tourbillon de mélange air/carburant en direction des moyens d'amorçage.

2. Système selon la revendication 1, **caractérisé en ce que** le cylindre est un cylindre à alimentation en air par conduits de transfert (6).

3. Système selon la revendication 1, **caractérisé en ce que** le cylindre est un cylindre à alimentation en air par soupapes.

## Patentansprüche

1. System für die Direkteinspritzung von Brennstoff im Verbrennungsraum eines Zylinders einer Brennkraftmaschine, welches mindestens eine Einspritzdüse (3) und Mittel (4) für die Zündung der Verbrennung in dem Verbrennungsraum enthält,
**dadurch gekennzeichnet, dass**
diese mindestens eine Einspritzdüse (3) parallel in einer Querrichtung (T) zu dem Verbrennungsraum (1) versetzt gegenüber der Längsachse X-X des Verbrennungsraumes angeordnet und gegenüber einer Querebene (P) zu der Achse X-X in Richtung der Mittel für die Zündung (4) geneigt ist, um das Gemisch aus Luft und Brennstoff in Richtung der Mittel für die Zündung zu verwirbeln.

2. System nach Anspruch 1,
**dadurch gekennzeichnet, dass**
der Zylinder ein Zylinder ist, der mit Hilfe von Speiserohren (6) gespeist wird.

3. System nach Anspruch 1,
**dadurch gekennzeichnet, dass**
der Zylinder ein Zylinder ist, der mit Hilfe von Ventilen mit Luft gespeist wird.

## Claims

1. System for directly injecting fuel into a cylinder combustion chamber of an internal combustion engine, comprising at least one fuel injector (3) and means (4) for priming the combustion in the chamber, **characterised in that** the said at least one injector (3) is disposed parallel to a direction tangential (T) to the chamber, so as to be offset relative to the longitudinal axis (X-X) of said chamber and inclined relative to a plane (P) transverse to said axis (X-X), in the direction of the priming means (4), to generate in the chamber a vortex of air/fuel mixture in the direction of the priming means.

2. System according to claim 1, **characterised in that** the cylinder is a cylinder which is fed with air via transfer ports (6).

3. System according to claim 1, **characterised in that** the cylinder is a cylinder which is fed with air via valves.
